# EUROPEAN PATENT APPLICATION

(11) **EP 3 608 131 A1**
(43) Date of publication of application: **12.02.2020**
(21) Application number: 18382597.5
(22) Date of filing: 07.08.2018
(51) Int. Cl.: B60D 1/06, B60R 9/06

(54) **A COUPLING DEVICE FOR COUPLING A LOAD CARRIER TO A TOW BALL**

(71) Applicant: Enganches Y Remolques Aragon S.L., 50016 Zaragoza (ES)
(72) Inventor: Vivanco Quero, Francisco Javier, 28044 MADRID (ES); Fernández Masa, Fernando, 28981 PARLA (ES); Pelaez Fombellida, Javier, 28905 GETAFE (ES); Armunia, Diego, 50016 ZARAGOZA (ES); Cabrejas, Sergio, 50016 ZARAGOZA (ES); Comeras, Carlos, 50016 ZARAGOZA (ES); Benito Monreal, Nelson, 50016 ZARAGOZA (ES)
(74) Representative: ZBM Patents - Zea, Barlocci & Markvardsen

(57) **Abstract**

A coupling device for coupling a load carrier to a tow ball is provided. The coupling device comprises a fixed and a movable jaw, wherein the movable jaw is pivotably connected to the fixed jaw for moving from an open position to a clamping position. The coupling device further comprises a lever system for moving the jaws from the open to the clamping position having a first end pivotably connected to the fixed jaw. In addition, the coupling device comprises a transfer arm for providing a clamping force to the movable jaw and the transfer arm has a first end pivotably connected to the movable jaw and a second end pivotably connected to the lever system. A load carrier comprising a coupling device according to any of the examples herein described is also provided.

## Description

The present disclosure relates to coupling devices for coupling a load carrier to a tow ball of a towing vehicle and load carriers comprising coupling devices.

### BACKGROUND

Tow bars or tow hitches are devices commonly used for connecting a towing vehicle or a tractor vehicle to a trailer or to a load carrier. The towing vehicle may thus pull the trailer and support the load carrier. Tow hitches may be mounted on the rear part of towing vehicles, e.g. in the area of the rear bumper of a car or a truck, for hooking a trailer or a load carrier.

Load carriers are structures for carrying different objects on a tow hitch of a towing vehicle. Load carriers are generally configured to carry objects such as sport equipment, e.g. bicycles or skis, luggage or animals.

For connecting a load carrier to a vehicle, tow hitches generally have the form of a tow ball which allows a coupling device of the load carrier to clamp it and thus establishing a mechanical connection between the towing vehicle and the load carrier.

Load carriers are generally only supported by the tow hitch. Therefore, load carriers need to be firmly attached to the vehicle. Load carriers commonly comprise a coupling device with jaws that clamp the tow ball of the vehicle. Load carriers are therefore clamped onto the tow ball by the pressure exerted by the jaws against the tow ball. Such jaws allow to quickly engage and release the tow ball. Jaws are movable from an open to a clamping position. On the one hand, the open position allows both releasing the connection of the jaws to the tow ball for disconnecting the load carrier from the vehicle and arranging the jaws of coupling device around the tow ball for clamping it. On the other hand, a load carrier is secured onto the tow ball when the jaws are in the clamping position. Coupling devices may also comprise a lever for moving the jaws from an open position to a clamping position or *vice versa.*

Typically, tow balls are substantially spherical and therefore the jaws have an internal substantially semi-spherical surface for fitting the tow ball. The internal surfaces of the clamping jaws generally have the complementary shape of the tow ball and exert opposite forces on the tow ball for locking the load carrier on the vehicle. Such opposite forces may be horizontal, i.e. parallel to the ground.

As the load carriers are typically supported by the opposite forces of the jaws, the pressure exerted by the jaws on the tow ball have to counteract loads produced when the vehicle is in use such as turns of the vehicle and oscillations created by the irregularities of the road pavement, to prevent disconnecting the load carrier from the vehicle. Chains or straps may be used to ensure that the load carrier is not detached from the vehicle.

Furthermore, tow balls may suffer from wear and tear and may have slightly different dimensions due to manufacturing tolerances. Therefore, pressure exerted by the clamping jaw may have to be adjusted from one tow ball to another tow ball and/or during the lifetime of the tow ball.

In known coupling devices, one of the jaws may be slidable within the housing of the coupling device for modifying the distance between the jaws. In addition, external pressure devices may be used for horizontally displacing the slidable jaw with respect to the other one for adjusting the distance between them and consequently for modifying the clamping force.

However, such coupling devices having one slidable jaw cannot be precisely adapted to the shape of the tow ball after wear and therefore cannot provide enough clamping force for securing the coupling device on the tow ball in all driving conditions. Furthermore, mounting external pressure devices for displacing the slidable jaw that provides a desired clamping force may require very fine adjustments. As such devices are externally mounted, the external pressure devices can be easily manipulated by unauthorized personnel and therefore the external device may be erroneously adjusted.

The present disclosure provides examples of systems and methods that at least partially resolve some of the aforementioned disadvantages.

### SUMMARY

In a first aspect, a coupling device for coupling a load carrier to a tow ball of a towing vehicle is provided. The coupling device comprises a fixed jaw configured to engage a portion of a tow ball and a movable jaw configured to engage a portion of a tow ball, wherein the movable jaw is pivotably connected to the fixed jaw about a movable jaw - fixed jaw pivoting axis for moving from an open position for releasing the tow ball to a clamping position for clamping the tow ball. The coupling device further comprises a lever system for moving the jaws from the open to the clamping position, wherein the lever system has a first end pivotably connected to the fixed jaw about a lever - fixed jaw pivoting axis and a transfer arm for providing clamping force to the movable jaw, wherein the transfer arm has a first end pivotably connected to the movable jaw about a transfer arm - movable jaw pivoting axis and a second end pivotably connected to the lever system about a lever - transfer arm pivoting axis.

The movable jaw pivots with respect to the fixed jaw by the action of the lever system as the movement of the lever system is transmitted by the transfer arm to the movable jaw. Pulling the lever system down and up allows a user to close or to open the jaws for connecting the coupling device to the tow ball.

In this aspect, the coupling device can provide enough clamping force against the tow ball despite the wear and the roughness of the tow ball. The clamping device may thus compensate the wear and the roughness of the tow ball. Such a clamping force is controlled by the transfer arm that pushes the movable jaw against the fixed jaw for maintaining the jaws in the clamped position. In addition, the transfer arm forms part of the mechanism for moving the jaws from an open to a clamping position. Therefore, the control of the pressure exerted by the transfer arm is prevented from being externally modified, e.g. by unauthorized people, and consequently the risk of an erroneous adjustment is reduced. Furthermore, locking the tow ball is improved as the jaws can better adapt to the shape of the tow ball and the transfer arm and can provide a higher clamping force than known coupling devices. Therefore, locking the coupling device on the tow ball is improved. As a result, an accidental release of the tow ball, and consequently a disconnection the load carrier from the tow ball, is prevented.

In some examples, the coupling device may comprise a first clamping axis extending from the lever - fixed jaw pivoting axis to the lever - transfer arm pivoting axis and the coupling device is configured in such a way that the transfer arm - movable jaw pivoting axis is positioned above the first clamping axis when the jaws are in the clamping position and below the first clamping axis when the jaws are in the open position, so that the ball is overclamped when the jaws are in the clamping position. Theoretically, the maximum clamping force in a clamping mechanism is attained when the three pivot points of the mechanism are in a straight line. However, such clamping mechanisms tend to easily unlock. Clamping mechanisms may be subjected to vibrations, e.g. vibrations of the engine of a vehicle or irregularities of the road pavement, or manufacturing tolerances or deformations, e.g. wear or roughness of the tow ball, which produces a misalignment of the clamping mechanism. Such a misalignment may cause that a part of the clamping force goes towards releasing the clamp which may lead to a quick release of the clamp. To prevent this from happening, clamping mechanisms may be designed to create an overclamped situation wherein the locking position is beyond the ideal position. This overclamped situation may be created by a clamping mechanism in such a way that the clamping force is used for holding the tow ball between the jaws and for exerting a force against unlocking.

According to this aspect, positioning the pivoting axis between the movable jaw and the transfer arm, i.e. the transfer arm - movable jaw pivoting axis, above the imaginary line extending from the pivoting axis between the lever and the fixed jaw, i.e. the lever - fixed jaw pivoting axis, to the pivoting axis between lever and the transfer arm, i.e. the lever - transfer arm pivoting axis, may produce an overclamped situation. Such a configuration means that when the coupling device is in the clamping position, the clamping force may be decomposed into a substantially horizontal force for clamping the tow ball and a substantially vertical force for preventing the movement of the lever. Consequently, a relatively high force is required for moving the jaws from a clamping to an open position. In this way, a force for opening the jaws needs first to be able to overcome the overclamped situation, i.e. the substantially vertical force, and then moving the lever for hinging the movable jaw with respect the fixed jaw. Therefore, an accidental opening of the jaws is prevented and the safety of the coupling device is improved.

In some examples, the lever system may comprise two bars extending from the connection between the lever system and the transfer arm, i.e. the lever - transfer arm pivoting axis, to the connection between the lever and the fixed jaw, i.e. the lever - fixed jaw pivoting axis. These bars may be arranged parallel to the lateral sides of the fixed jaw and may thus partially enclose the movable jaw and the transfer arm. The lever system may further comprise a handle for pulling the lever system. The lever may thus be pulled by the handle and this movement may be transmitted by the bars to the transfer arm. One end of the bars may be connected to the transfer arm and to opposite end to the fixed jaw. As these bars may be connected to the lateral sides of the fixed jaw, the clamping force exerted by the fixed jaw against the tow ball may be more homogenously distributed and the coupling device is prevented from turning around the tow ball.

In some of these examples, the bars may be curved. According to this aspect, when the jaws are in the clamping position, the bars tend to get straight under tensile forces, i.e. reducing the curvature of the bars, whereas the bars tend to increase the curvature under compressive forces when the jaws are in the open position. In the clamping position, the jaws exert an opposite force for locking the tow ball between them, the transfer arm is in compression and the bars are in tension and bending because of its curvature. Such a curvature enhances the control of the force exerted by the jaws against the tow ball. In addition, this shape provides an extra force against an undesirable release of the jaws as the bending moments of the bars has to be overcame for moving the movable jaw.

In some examples, the length of the transfer arm may be adjustable. Therefore, the clamping force provided by the jaws may be adapted to the shape of the tow ball and thus compensating the wear of tow ball. As the length of the transfer arm is adjustable, the distance from the transfer arm - movable jaw pivoting axis to the lever - transfer arm pivoting axis may be adjustable.

Additionally, or alternatively, the jaws may comprise an inner surface for engaging a portion of the tow ball. The inner surface may include a recess. Therefore, the inner surface of the jaws does not continuously contact the tow ball when the jaws are in the clamping position. In some examples, the recess may be a semispherical surface. Alternatively, the recess may have an elongated shape and may extend at least along a portion of the inner surface.

In these examples, the recess may be arranged in a portion of the inner surface corresponding to the equator of the tow ball (i.e. an intersection between a plane at half the height of the tow ball through a center of the approximate sphere of the tow ball and the outer perimeter of the tow ball). According to this aspect, the inner surface does not contact the tow ball in a portion of the equator. In some examples, the recess may be arranged in a central portion of the inner surface of the jaws.

As some portions of the tow ball are not contacted by the inner surface, the clamping force against the tow ball is not uniformly exerted on the tow ball. Some portions of the tow ball are only contacted by portions of the inner surface arranged above and below the equator of the tow ball. The clamping force may therefore comprise a vertical and a horizontal vector acting against the ball. As a result, the locking capacity of the jaws is increased and therefore the resistance against the rotation of the coupling device with respect to the tow ball is increased. The load carrier may thus be firmly locked on the tow ball.

In some examples, the coupling device may have a locking arrangement for preventing an unwanted movement from the clamping position to the open position. The locking arrangement may be moved from a locking position to an unlocking position by e.g. a key for allowing the coupling device to be moved from the clamping position to an open position.

In a further aspect, a load carrier comprising a coupling device according to any of the examples herein described is provided.

### BRIEF DESCRIPTION OF THE DRAWINGS

Non-limiting examples of the present disclosure will be described in the following, with reference to the appended drawings, in which:
Figure 1 shows an example of a load carrier connected to a tow bar of a tractor vehicle;
Figure 2 shows an isometric view of an example of a coupling device;
Figure 3 shows an exploded view of the coupling device of Figure 2;
Figure 4 shows an example of a load carrier in an open position;
Figure 5 shows the example of the load carrier of Figure 4 in a clamping position;
Figure 6 schematically represents a coupling device configured in an open position;
Figure 7 schematically represents a coupling device experiencing an overclamped situation in a clamping position;
Figure 8 schematically illustrates a cross sectional view of an example of a fixed and a movable jaw clamping a tow ball.

### DETAILED DESCRIPTION OF EXAMPLES

In these figures the same reference signs have been used to designate matching elements.

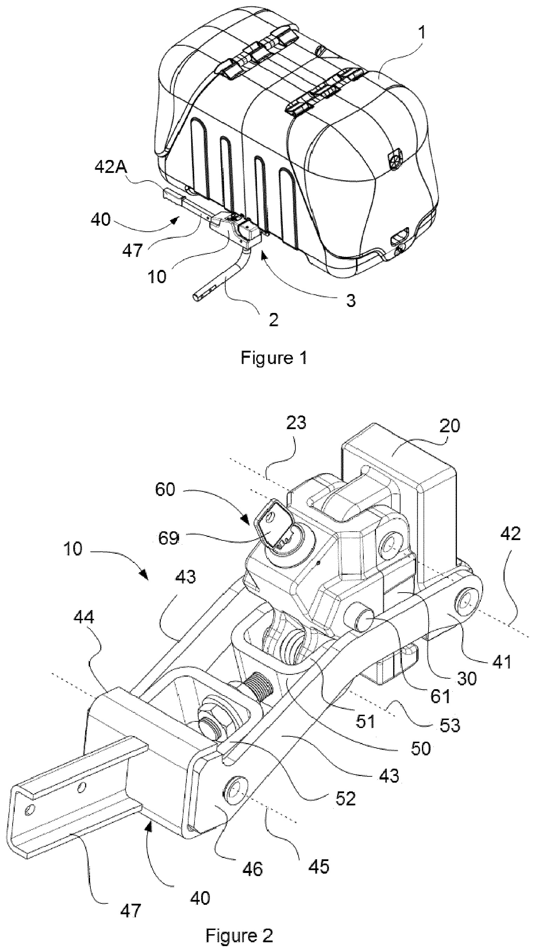

Figure 1 shows a load carrier 1 having a coupling device 10 connected to a tow ball 3 of a tow bar 2 of a vehicle (not shown). The tow bar 2 is mounted on the rear part of a towing vehicle, e.g. in the area of the rear bumper of a car. The coupling device 10 of the load carrier 1 connects the load carrier 1 to the vehicle by clamping the tow ball 3.

Such a load carrier 1 is supported by the mechanical connection between the coupling device 10 and the tow ball 3. This load carrier may be configured to carry objects such as sport equipment, luggage or animals. For example bicycles, skis or golf equipment may be transported on load carriers.

The coupling device 10 comprises a lever system 40 for clamping and unclamping the tow ball. In this example, the lever system 40 comprises an extruded profile 47 and a handle 42A configured to be grabbed by a user for pulling up and down the lever system. In this example, the coupling device 10 may be connected to the tow ball 3 by pushing the lever down and may be released from the tow ball by pulling it up.

Figure 2 shows an isometric view of an example of a coupling device 10 for coupling a load carrier to a tow ball of a towing vehicle. The coupling device comprises a fixed jaw 20 configured to engage a portion of a tow ball (not shown in Figure 2) and a movable jaw 30 configured to engage a portion of a tow ball (not shown in Figure 2). The movable jaw 30 is pivotably connected to the fixed jaw 20 about a movable jaw - fixed jaw pivoting axis 23 and the movable jaw can pivot and move between an open position for releasing the tow ball and a clamping position for clamping the tow ball. The coupling device 10 further comprises a lever system 40 for moving the jaws 20, 30 from the open to the clamping position. The lever system 40 has a first end 41 pivotably connected to the fixed jaw 20 about a lever - fixed jaw pivoting axis 42. In addition, the coupling device 10 has a transfer arm 50 for providing clamping force to the movable jaw 30, wherein the transfer arm 50 has a first end 51 pivotably connected to the movable jaw 30 about a transfer arm - movable jaw pivoting axis 53 and a second end 52 pivotably connected to the lever system 40 about a lever - transfer arm pivoting axis 45.

In this example, the lever system 40 comprises a profile 47 having an end with a handle (shown in Figure 1 but not in Figure 2) and two bars 43. Such two bars 43 may extend from the connection between the lever system 40 and the second end 52 of the transfer arm 50 to the connection between the lever system 40 and the fixed jaw 20. A connecting structure 44 may connect the two bars to the extruded profile 47, and therefore to the handle. The connecting structure 44 may be a U-shaped profile or bracket having a base and two sidewalls. The sidewalls may partially surround a second end 46 of the bars 43 and therefore the second ends 46 engage the connecting structure 44. The connecting structure 44 may be rigidly connected to the bars and to the profile 47, e.g. welded. The whole lever system 40, i.e. the handle 42A, the profile 47, the connecting structure 44 and the bars 43, may thus pivot about the lever - fixed jaw pivoting axis 42.

Bars 43 of Figure 2 are parallel to each other and curved. The two portions of the bars may define an angle that is slightly lower than 180° from the lever - fixed jaws pivoting axis 42 to lever - transfer arm pivoting axis 45. Such a curvature of the bars enhances the locking capacity of the coupling device.

The coupling device of Figure 2 further comprises a locking arrangement 60 for preventing an unwanted movement from the clamping position to the open position. A key 69 may move the locking arrangement from a locking position to an unlocking position for allowing the coupling device to be moved from the clamping position to an open position. The locking arrangement 60 may comprise a locking pin 61. The locking pin may block the movement of the movable jaw with respect to the fixed jaw. In some examples, the locking pin may be moved along its longitudinal axis for blocking the movement of the lever.

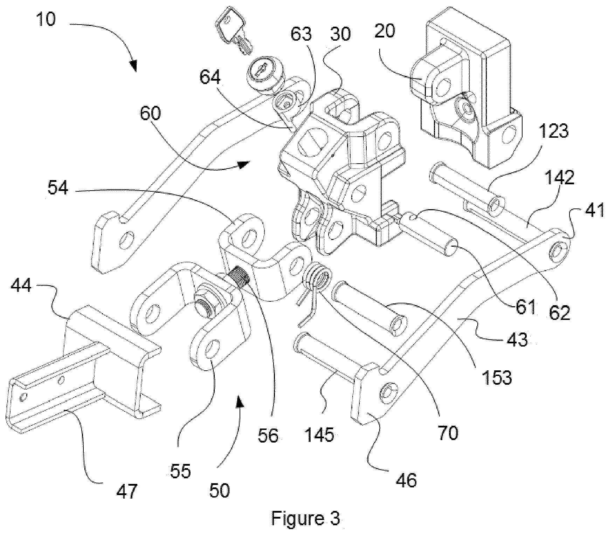

Figure 3 shows an exploded view of the coupling device of Figure 2. The fixed jaw 20 and the movable jaw 30 may be pivotably connected via the shaft 123 inserted through holes of the fixed and the movable jaws. The center of shaft 123 substantially corresponds to the movable jaw - fixed jaw pivoting axis. Similarly, the shaft 142 may connect the two bars 43 to the fixed jaw 20, the shaft 145 may connect the two bars 43 to the transfer arm 50 and the transfer arm 50 may be connected to the movable jaw 30 by the shaft 153. The center of the shaft 142 may substantially coincide with the lever - fixed jaw pivoting axis, whereas the center of the shaft 145 substantially coincides with the lever - transfer arm pivoting axis and the center of the shaft 153 substantially coincides with the transfer arm - movable jaw pivoting axis 53. The shafts may be inserted into corresponding holes and retained inside by a pair of caps arranged on the opposite ends thereof. In other examples, these shafts may be clinched.

The transfer arm 50 may comprise a first bracket 54 arranged on the first end and a second bracket 55 arranged on the second end. In this example, the transfer arm 50 comprises an adjusting system 56 for adjusting the distance between the first 54 and the second bracket 55. The length of the transfer arm may be adjustable by the adjusting system. In this example, the distance between the brackets may thus be adjusted.

In some examples, the adjusting system 56 may be a threaded stud which connects the first bracket 54 to the second bracket 55. The adjustment system may further comprise two nuts that can threadedly engage with the stud, and which clamp the bracket in between them. Other adjusting systems may also be suitable, such as hydraulic system or a system including telescopic bar(s).

In some examples, the first 54 and the second brackets 55 may be U-shaped profiles having a base and two sidewalls. The brackets are oppositely arranged so that the base of the first bracket 54 faces the base of the second bracket 55. The sidewalls of the first bracket 54 may be oriented towards the transfer arm - movable jaw pivoting axis, i.e. are extended from the base to the transfer arm - movable jaw pivoting axis. On the contrary, the sidewalls of the second bracket 55 may oriented towards the lever - transfer arm pivoting axis.

In some examples, a portion of the sidewalls of the second bracket 55 may substantially fit the internal shape of the connecting structure 44 of the lever system.

In some examples, the sidewalls of the first and the second brackets may comprise through holes for respectively inserting the shaft 153 for connecting the movable jaw 30 to the first bracket 54 and the shaft 145 for connecting the bars 43 to the second bracket 55.

The coupling device according to Figure 3 comprises a torsional spring 70 arranged around the shaft 153 that pivotably connects the movable jaw and the transfer arm, in particular the first bracket 54. The torsional spring may have one end coupled with the movable jaw and the other end coupled with the transfer arm. The torsional spring provides a tendency or bias for the mechanism to come back to the initial position. The torsional spring may thus control the rotation of the transfer arm with respect to the movable jaw around the transfer arm - movable jaw pivoting axis 53. The torsional capacity of the spring defines the rotational angle between the ends of the spring and the thus the movement of the transfer arm with respect to the movable jaw.

In Figure 3, the coupling device 10 further comprises a locking arrangement 60 for preventing an unwanted movement from the clamping position to the open position.

The locking arrangement 60 may be mounted on the movable jaw 30 and may comprise a locking pin 61 which may block the upwards movement of lever 40. Therefore, the movable jaw may be blocked in the clamping position. As a result, an unwanted release of the tow ball is prevented and the safety of the towing connection is further improved.

In some examples, the locking pin may engage with at least one of the bars 43 of the lever system. In the unlocking position, the locking pin may be held inside a hole of the movable jaw. The locking pin may be moved along its longitudinal axis, i.e. in a substantially horizontal direction. The locking pin 61 may thus be moved towards at least one of the bars 43 for blocking its movement. The locking pin 61 may include a groove 62.

A lock cylinder 63 may be arranged, e.g. inserted, on the movable jaw 30 and configured to be actuated by the key 69 to rotate around its longitudinal axis from a locking position to an unlocking position. The lock cylinder 63 may comprise a locking member 64 arranged at the end opposite to the key 69. The locking member 64 may engage with the groove 62 of the locking pin 61. The rotational movement of the locking member 64 of the lock cylinder may be transformed to a linear movement of the locking pin 61 through the coupling between the groove 62 and the locking member 64. When the lock cylinder 63 rotates by the action of a user, by e.g. a key 69, the locking member 64 also rotates. Then, the locking member 64 makes the locking pin 61 move outwardly for blocking the rotation of the bars 43.

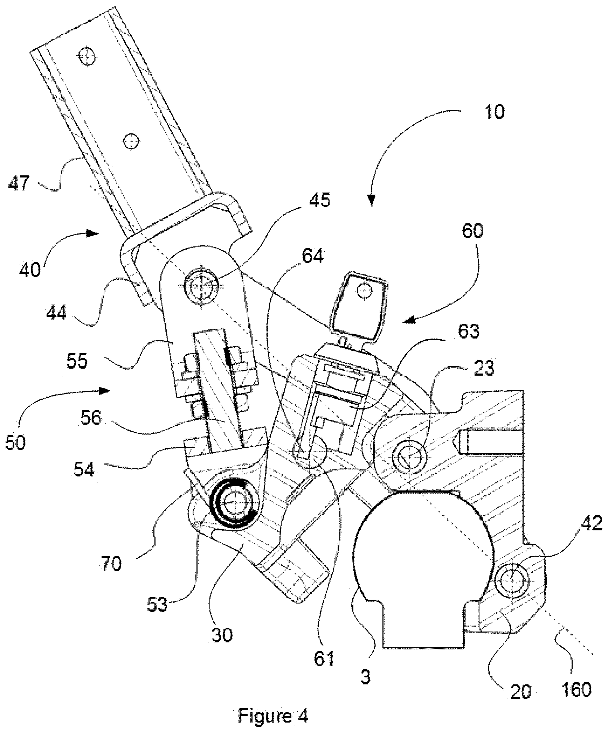

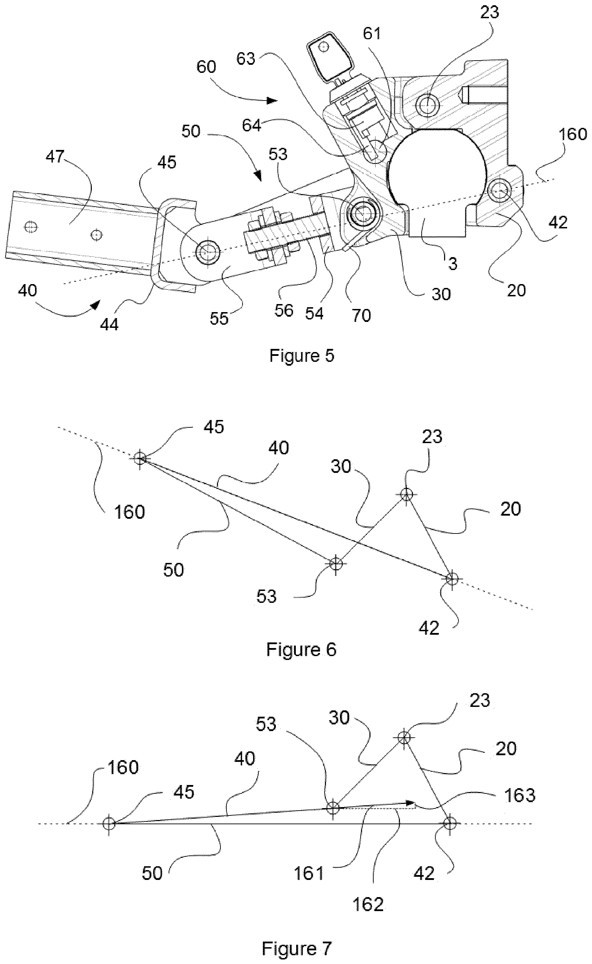

Figure 4 shows a cross-sectional view of an example of a load carrier in an open position and Figure 6 in a clamping position. The load carrier 10 of Figure 4 is in open position for releasing or placing a tow ball 3 between the fixed 20 and the movable jaws 30, whereas the tow ball is secured between the jaws in Figure 5. As both Figure 4 and 5 are cross-sectional views of a load carrier, connecting bars pivotably connected to the fixed jaw 20 around the lever - fixed jaw pivoting axis 142 and to the transfer arm 50 around the lever - transfer arm pivoting axis 45 are not illustrated in these figures.

The lever 40 moves down from Figure 4 to Figure 5 (by the action of a user pushing down the lever) and makes the transfer arm 50 rotate around the lever - transfer arm pivoting axis 45, the movable jaw 30 rotate around the movable jaw - fixed jaw pivoting axis 23 for clamping the tow ball 3 and the transfer arm 50 rotate around the transfer arm - movable jaw pivoting axis 53 for providing a clamping force to the movable jaw 30.

The transfer arm 50 of Figures 4 and 5 comprises a first bracket 54 arranged on the first end 51 of the transfer arm and a second bracket 55 arranged on the second end 52 of the transfer arm. The transfer arm 50 may also comprise an adjusting system 56 connecting the first and the second brackets. The length of the transfer arm 50 may thus be adjusted for the real shape of the tow ball in order to provide a defined clamping force.

The connection between the movable jaw 30 and the second bracket 55 of the transfer arm may comprise a torsional spring 70 arranged around the shaft 53.

The coupling device 10 may also comprise a locking arrangement 60 for locking the coupling device in a clamping position. The locking arrangement 60 may be inserted in the movable jaw 30. A locking member 64 of a locking cylinder 63 may engage with a groove or notch of locking pin 61. The lock cylinder 63 may rotate by the action of a key and the coupling between the locking member and the groove makes the pin cylinder to move along its longitudinal axis to block the upwards movement of the lever system 40.

In Figure 5, the ball is overclamped, i.e. the clamping position is beyond the ideal position, as the transfer arm - movable jaw pivoting axis 53 is above the first clamping axis 160 extending from the lever - fixed jaw pivoting axis 42 to the lever - transfer arm pivoting axis 45. In these examples, the transfer arm - movable jaw pivoting axis 53 is positioned below the first pivoting axis 160 in Figure 4, i.e. when the coupling device is in the open position, and above the first pivoting axis 160 in Figure 5, i.e. when the coupling device is in the clamping position.

Such a coupling device configured to create an overclamped situation is schematically illustrated in Figure 6 and Figure 7. The coupling device is schematically shown in the open position in Figure 6 and in a clamping position in Figure 7. In the open position the transfer arm - movable jaw pivoting axis 53 is situated below the first pivoting axis 160. On the other hand, after pushing down the lever 40, subsequently pivoting the transfer arm 50 around the lever - transfer arm pivoting axis 45 and the movable jaw 30 with respect to the transfer arm 50 around the transfer arm - movable jaw pivoting axis 53 so that the movable jaw 30 is moved towards the fixed jaw 20 around the movable - fixed jaw pivoting axis 23, the transfer arm - movable jaw pivoting axis 53 is situated above the first clamping axis. As a result, an overclamped situation is created and thus a quick and unexpected release of the clamping jaws can be avoided.

In Figure 7, the transfer arm 50 provides a clamping force 161 towards the movable jaw 30 for preventing the opening of the jaws. Such a clamping force may be discomposed into a substantially horizontal force 162 and a substantially vertical force 163. Therefore, for opening the jaws, such a vertical force 163 must be overcome. As a result, an unexpected opening of the jaws is prevented and the safety of the coupling device is improved.

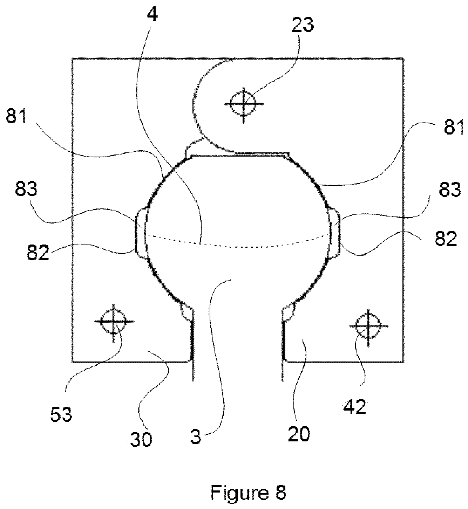

Figure 8 schematically illustrates a cross sectional view of an example of a fixed and a movable jaw clamping a tow ball. The movable jaw 30 may pivot around movable jaw - fixed jaw pivoting axis 23 for clamping the tow ball 3. A lever (not shown) may pivot with respect to the fixed jaw 20 around the lever - fixed jaw pivoting axis 42 and a transfer arm (not shown) may pivot with respect to the movable jaw 30 around the transfer arm - movable jaw pivoting axis 53.

In some examples, the movable 30 and the fixed jaws 20 comprise an inner surface 81 for engaging a portion of the tow ball. The inner surface 81 may include a recess 82. A gap 83 may be formed between the recess 82 and the tow ball 3. In Figure 8, the recess 82 has a part spherical surface and is arranged at a central portion of the inner surface 81. In these examples, both inner surfaces have a recess. The recesses are arranged at the opposite sides of the inner surfaces of the jaws.

In figure 8 the recesses are arranged in a portion of the inner surface that may correspond to the equator 4 of the tow ball. Therefore, the tow ball is not contacted by the whole surface of the inner surface of the jaws. Some portions of the tow ball are only contacted by portions of the inner surface arranged above and below the equator of the tow ball. The clamping force may therefore comprise a vertical and a horizontal vector acting against the ball.

As a result, the locking capacity of the jaws is increased and therefore the risk of rotation of the jaws with respect to the tow ball is prevented.

In some examples, only one of the jaws may comprise a recess. In other examples, one of the jaws may comprise an elongated recess and the other jaw may comprise a semi-spherical recess. The arrangement with one or more recesses on the inner surfaces of the jaws could be provided independently from the herein disclosed opening/closing mechanism.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A coupling device for coupling a load carrier to a tow ball of a towing vehicle comprising:
a fixed jaw configured to engage a portion of a tow ball;
a movable jaw configured to engage a portion of a tow ball, wherein the movable jaw is pivotably connected to the fixed jaw about a movable jaw - fixed jaw pivoting axis for moving from an open position for releasing the tow ball to a clamping position for clamping the tow ball;
a lever system for moving the movable jaw from the open to the clamping position, wherein the lever system has a first end pivotably connected to the fixed jaw about a lever - fixed jaw pivoting axis; and
a transfer arm for providing a clamping force to the movable jaw, wherein the transfer arm has a first end pivotably connected to the movable jaw about a transfer arm - movable jaw pivoting axis and a second end pivotably connected to the lever system about a lever - transfer arm pivoting axis.

2. A coupling device according to claim 1, wherein:
a first clamping axis extends from the lever - fixed jaw pivoting axis to the lever - transfer arm pivoting axis; and
the coupling device is configured in such a way that the transfer arm - movable jaw pivoting axis is positioned above the first clamping axis when the jaws are in the clamping position and below the first clamping axis when the jaws are in the open position, so that the ball is overclamped when the jaws are in the clamping position.

3. A coupling device according to any of claims 1 - 2, wherein the lever system comprises two bars extending from the lever - transfer arm pivoting axis to the lever - fixed jaw pivoting axis.

4. A coupling device according to claim 3, wherein one or more of the bars are curved.

5. A coupling device according to any of claims 1 - 4, wherein the length of the transfer arm is adjustable, so that the distance from the transfer arm - movable jaw pivoting axis to the lever - transfer arm pivoting axis is adjustable.

6. A coupling device according to claim 5, wherein the transfer arm comprises a first bracket arranged at the first end, a second bracket arranged at the second end and an adjusting system for adjusting the distance between the first and the second brackets.

7. A coupling device according to claim 6, wherein the adjusting system is a threaded stud.

8. A coupling device according to any of claims 6 - 7, wherein the first and the second brackets are U-shaped profiles having a base and two sidewalls, and wherein the two sidewalls of the first bracket extend from the transfer arm - movable jaw pivoting axis to the base of the first bracket and the two sidewalls of the second bracket extend from the lever - transfer arm pivoting axis to the base of the second bracket.

9. A coupling device according to any of claims 1 - 8, wherein the movable and the fixed jaws comprise:
an inner surface for engaging a portion of the tow ball;
wherein the inner surface of the movable and/or the fixed jaws include a recess
and wherein the jaws are configured in such a way that when the jaws are in the clamping position there is a gap between the recess and the tow ball.

10. A coupling device according to claim 9, wherein the recess is arranged in a portion of the inner surface corresponding to a portion of the equator of the tow ball when the jaws are clamping the tow ball.

11. A coupling device according to any of claims 1 - 10, wherein the coupling device comprises a locking arrangement for preventing an unwanted movement from the clamping position to the open position.

12. A coupling device according to claim 11, wherein the locking arrangement comprises locking pin for blocking the upwards movement of the lever configured to be moved along its longitudinal axis.

13. A coupling device according to claim 12, wherein the locking arrangement comprises:
a lock cylinder configured to be actuated by a key to rotate around its longitudinal axis from an unlocking position to an locking position,
the lock cylinder comprises a locking member configured to engage with a groove of the locking pin; and wherein
the locking arrangement is configured in such a way that when the lock cylinder is moved from the unlocking position to a locking positon, the locking member moves the locking pin along its longitudinal axis.

14. A load carrier comprising a coupling device according to any of claims 1 - 13.
